# DEMANDE DE BREVET EUROPEEN

(11) **EP 0 752 553 A1**
(43) Date de publication de la demande: **08.01.1997**
(21) Numéro de dépôt: 96470016.5
(22) Date de dépôt: 01.07.1996
(51) Int. Cl.: F16L 23/032

(54) **Assemblage de deux pièces, et élément à bride d'assemblage correspondant**

(30) Priorité: 04.07.1995 FR 9508060
(71) Demandeur: PONT-A-MOUSSON S.A., 54000 Nancy (FR)
(72) Inventeur: Zinsius, Joseph, Maidières, 54700 Pont-a-Mousson (FR)
(74) Mandataire: Puit, Thierry

(57) **Abrégé**

L'invention concerne un assemblage de deux pièces (10, 12) comportant une tige (28) de fixation traversant une lumière de chaque pièce. La lumière de chaque pièce (10, 12) est une encoche (20A, 20B, 22A, 22B, 20A', 20B', 22A', 22B') dont la profondeur est supérieure au diamètre de la tige (28). Les encoches des deux pièces sont disposées de telle sorte que, en position assemblée, les ouvertures de ces encoches soient décalées angulairement l'une par rapport à l'autre autour de l'axe de la tige (28).

Application à l'assemblage de brides de conduites de transport de fluide.

## Description

La présente invention concerne un assemblage de deux pièces du type comportant une tige de fixation traversant une lumière de chaque pièce.

L'invention concerne également un élément à bride d'assemblage, notamment un élément de conduite de transport de fluide, du type comportant une bride extérieure d'extrémité.

Elle concerne par ailleurs un moule pour la fabrication d'un élément à bride d'assemblage.

Il est connu, afin d'assembler deux éléments d'une conduite, de munir ces éléments d'une bride à leur extrémité. Afin d'assurer leur assemblage, les brides comportent des trous au travers desquels sont introduites des tiges de boulon. Ces brides sont généralement obtenues par mise en oeuvre de procédés de fonderie dans des moules de forme adaptée. Les trous des brides sont obtenus soit par perçage après démoulage de la bride, soit par noyautage sable. Dans ce dernier cas, on rapporte un noyau ou galette pourvu de bossages de la forme des trous et centré sur le noyau central du tronçon tubulaire de la conduite. L'ensemble est alors placé dans le moule en sable avant la coulée du métal en fusion.

Ces méthodes de fabrication des brides sont relativement complexes à mettre en oeuvre et allongent le cycle de fabrication de celles-ci.

L'invention a pour but de proposer un assemblage de deux pièces, ainsi qu'un élément à bride d'assemblage, grâce auquel la fabrication des pièces est facile et rapide, en ayant recours notamment à un moulage simple dans un moule formé de deux demi-moules, et ne mettant pas en oeuvre de noyau ou galette pour la fabrication des lumières de passage des tiges de boulon.

A cet effet, l'invention a pour objet un assemblage de deux pièces du type précité, caractérisé en ce que la lumière de chaque pièce est une encoche dont la profondeur est supérieure au diamètre de la tige, les encoches des deux pièces étant disposées de telle sorte que, en position assemblée, les ouvertures de ces encoches soient décalées angulairement l'une par rapport à l'autre autour de l'axe de la tige.

L'assemblage peut présenter l'une ou plusieurs des caractéristiques suivantes :
- chaque encoche est ménagée dans une partie en forme de bride de la pièce correspondante, et en ce que l'ouverture de chaque encoche débouche latéralement sur le pourtour de ladite bride ;
- en position assemblée, les ouvertures des encoches sont décalées angulairement de sensiblement 90° ;
- les encoches sont délimitées par deux rives sensiblement parallèles reliées l'une à l'autre au fond de l'encoche par une portion en demi-cercle ;
- ladite tige de fixation est la tige d'une vis d'un boulon, dont la tête de vis prend appui sur l'une des pièces et dont l'écrou prend appui sur l'autre pièce;
- chaque pièce comporte deux encoches de réception de deux tiges de fixation respectives, les ouvertures des encoches d'une même pièce étant décalées angulairement l'une de l'autre et disposées de telle sorte que, en position assemblée, l'ouverture de chaque encoche de la première pièce soit décalée angulairement de l'ouverture de l'encoche correspondante de la deuxième pièce autour de l'axe de la tige de fixation associée ;
- chaque pièce comporte deux paires d'encoches de réception de quatre tiges de fixation respectives, les ouvertures des encoches d'une même paire étant orientées dans le même sens, alors que les ouvertures des encoches de paires différentes sont décalées angulairement de sensiblement 180° ;
- au moins l'une desdites pièces de l'assemblage est sensiblement de symétrie axiale et lesdites encoches sont ménagées sensiblement à la même distance de l'axe de ladite pièce ; et
- les deux pièces sont sensiblement identiques.

L'invention a également pour objet un élément à bride d'assemblage, notamment un élément de conduite de transport de fluide, du type précité, caractérisé en ce que des encoches sont ménagées dans la bride et sont régulièrement réparties autour de l'axe de la bride, chaque encoche ayant une direction générale qui forme un angle aigu non nul avec le rayon correspondant.

L'élément à bride peut présenter l'une ou plusieurs des caractéristiques suivantes :
- deux paires d'encoches sont ménagées dans la bride avec leur ouverture débouchant latéralement sur le pourtour de cette bride, les ouvertures des encoches d'une même paire étant orientées dans le même sens, alors que les ouvertures des encoches de paires différentes sont décalées angulairement de sensiblement 180° ;
- la bride présente une surface d'accouplement avec une pièce complémentaire de forme tronconique centrée sur l'axe de la bride ;
- la surface tronconique a un pourtour extérieur sensiblement circulaire qui est contenu dans la région délimitée par les encoches ; et
- la bride a un pourtour extérieur sensiblement carré.

En outre, l'invention a pour objet un moule pour la fabrication d'un élément à bride tel que décrit ci-dessus, caractérisé en ce qu'il comporte deux demi-moules, chaque demi-moule comportant un évidement de forme sensiblement parallélépipédique dont le fond est muni d'au moins une protubérance de forme conjuguée à celle d'une encoche de la bride.

Dans le cas d'un moule pour la fabrication d'un élément de conduite à bride d'assemblage, l'évidement est prolongé par un second évidement en forme de demi-cylindre,

L'invention sera mieux comprise à la lecture de la description qui va suivre, donnée uniquement à titre d'exemple et faite en se référant aux dessins sur lesquels :
- la figure 1 est une vue en perspective d'un assemblage selon l'invention de deux éléments à bride d'une conduite de transport de fluide ;
- la figure 2 est une vue en perspective d'un demi-moule pour la fabrication d'un élément à bride de la figure 1 ;
- la figure 3 est une vue en coupe longitudinale, suivant deux demi-plans décalés angulairement de 135°, d'un autre exemple d'assemblage selon l'invention de deux éléments à bride d'une conduite de transport de fluide ; et
- les figures 4 et 5 sont des vues en coupe longitudinale à plus grande échelle d'un même détail de la figure 3, envisageant deux modes de réalisation différents.

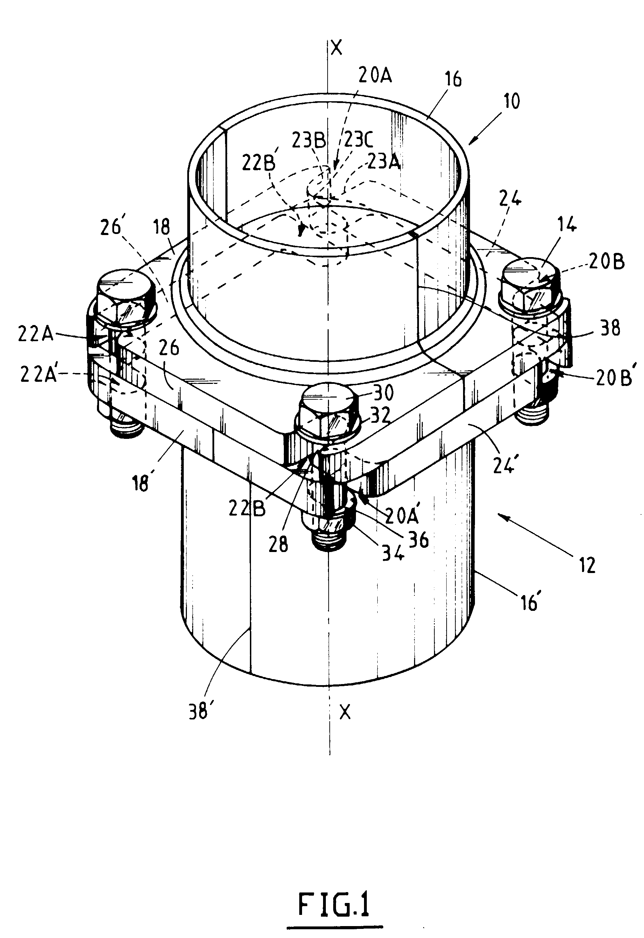

Sur la figure 1 est représenté un assemblage coaxial de deux éléments à bride supérieur 10 et inférieur 12 constitués chacun d'un tronçon tubulaire. A l'exception de la longueur de ces tronçons, les éléments 10 et 12 sont identiques, d'axe X-X supposé vertical. L'assemblage est réalisé à l'aide de quatre boulons 14, dont seuls trois sont représentés. Seul l'élément supérieur 10 sera décrit en détail, et les parties constitutives de l'élément 12 semblables à celles de l'élément 10 sont désignées sur la figure 1 et dans la description par les mêmes références que celles de l'élément 10 auxquelles est ajouté le symbole ' (prime).

L'élément 10 comporte un tronçon tubulaire 16, dont une extrémité libre est adaptée pour être solidarisée par tout moyen approprié à l'extrémité d'un conduit de transport de fluide. L'autre extrémité du tronçon tubulaire porte une bride extérieure 18 venue de matière.

La bride 18 a un pourtour extérieur de forme générale carrée centré sur l'axe X-X et forme une plaque d'accouplement des deux éléments de conduite l'un sur l'autre suivant deux surfaces annulaires d'accouplement. Les sommets de la bride 18 sont légèrement arrondis.

Deux paires d'encoches 20A, 20B et 22A, 22B sont ménagées sur la bride 18, au voisinage des coins de celle-ci. Elles sont ainsi ménagées sensiblement à la même distance de l'axe X-X. Ces encoches ont une ouverture débouchant latéralement sur le pourtour de la bride 18. Elles ont une forme oblongue et sont délimitées par deux rives 23A, 23B parallèles ou légèrement divergentes, reliées au fond de l'encoche par une portion en demi-cercle 23C. Leur profondeur est supérieure au diamètre de la tige des boulons 14.

Les encoches 20A, 20B de la première paire d'encoches ont leurs ouvertures orientées dans le même sens, et débouchent perpendiculairement sur un côté 24 du carré défini par la bride 18.

De même, les encoches 22A, 22B de la seconde paire d'encoches ont leurs ouvertures orientées dans le même sens et débouchent perpendiculairement sur un côté 26 du carré opposé au côté 24. Ainsi, les encoches 22A, 22B ont leurs ouvertures décalées angulairement de 180° par rapport à celles des encoches 20A, 20B.

Dans l'assemblage représenté sur la figure 1, l'élément inférieur 12 est disposé de telle sorte que la bride 18' soit appliquée sur toute sa surface sur la bride 18 de l'élément supérieur 10. Par ailleurs, la bride 18' est décalée angulairement autour de l'axe X-X de 90°. Ainsi, les encoches 20A, 20B, 22A, 22B sont disposées partiellement au-dessus des encoches respectivement 22B', 20B', 22A' et 20A'. De plus, les ouvertures de ces dernières sont décalées angulairement de 90° par rapport aux ouvertures des encoches avec lesquelles elles sont associées.

Les encoches ainsi superposées délimitent un conduit de passage sensiblement cylindrique pour une tige 28 de fixation des boulons 14. Chaque tige 28 est totalement maintenue dans le conduit formé par les encoches dont les ouvertures sont décalées de 90° autour de l'axe de chaque tige. Pour assurer le boulonnage des éléments de conduite, la tête 30 du boulon vient en appui sur la bride 18 par l'intermédiaire d'une rondelle 32, alors qu'un écrou de serrage 34 vient en appui par l'intermédiaire d'une rondelle 36 sur la bride 18'.

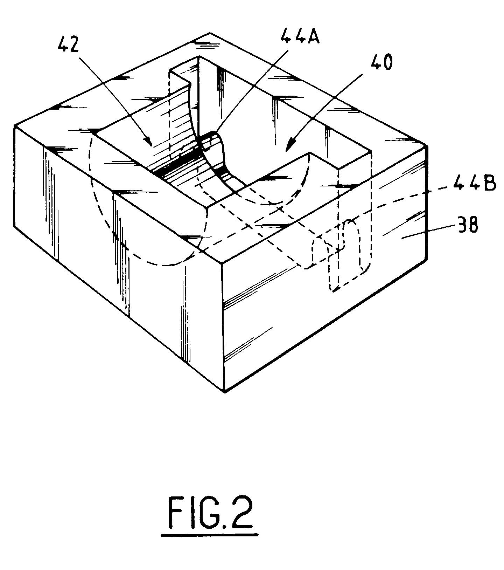

Les éléments à bride représentés sur la figure 1 sont obtenus par moulage de fonte en fusion dans un moule formé de deux demi-moules identiques délimitant intérieurement la forme extérieure de l'élément à bride. L'un de ces demi-moules est représenté sur la figure 2. Il est formé d'un corps 38 dans lequel est délimité un premier évidement 40, de forme sensiblement parallélépipédique, définissant une moitié de la bride 18. Ce premier évidement est prolongé par un second évidement 42 ayant une forme de demi-cylindre définissant la moitié du tronçon cylindrique 16. Deux protubérances 44A, 44B de forme conjuguée de celle des encoches de la bride sont venues de matière avec le fond de l'évidement 40 et définissent la paire d'encoches 20A, 20B, ouvertes dans le même sens. Le passage intérieur du conduit 16 est réalisé à partir d'un noyau cylindrique amovible (non représenté) introduit entre les deux demi-moules.

En utilisant un tel moule, le plan de joint de chaque élément est longitudinal, contient l'axe X-X et sépare la première paire d'encoches 20A, 20B de la seconde paire 22A, 22B dont les ouvertures sont opposées. Les traces des plans de joint des éléments 10 et 12 sont repérées par les références 38 et 38' sur la figure 1.

On conçoit que le moulage d'un tel élément à bride est aisé et ne nécessite pas l'utilisation de noyaux pour la réalisation des lumières de passage des boulons 14, grâce au fait que les encoches 20A, 20B, 22A, 22B débouchent en dépouille sur le pourtour de la bride 18.

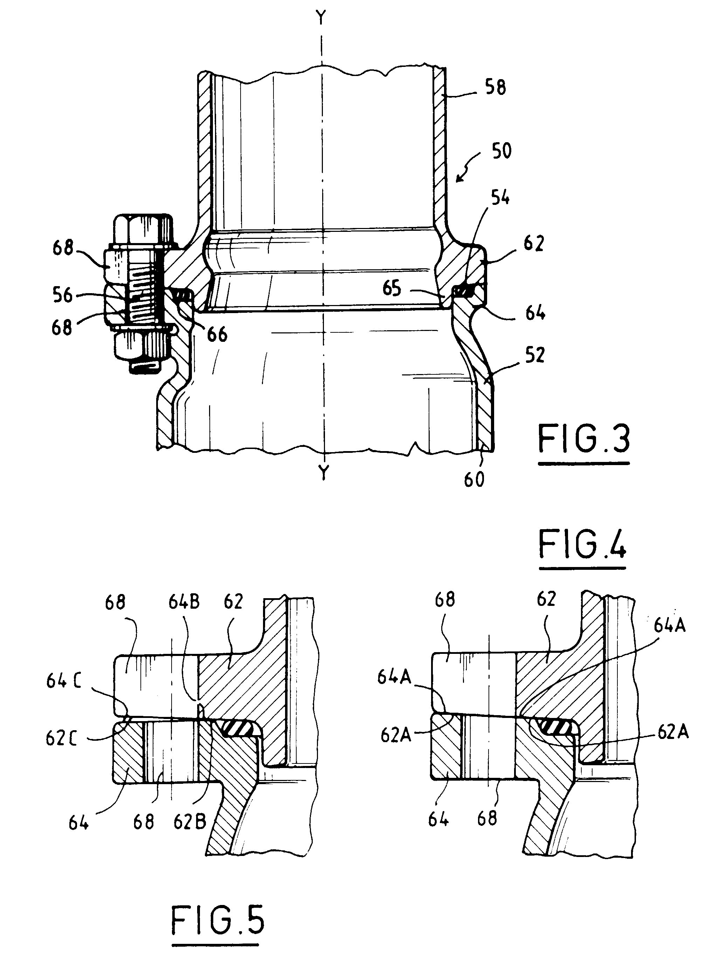

Sur la figure 3 est représenté un autre mode de réalisation d'un assemblage coaxial de deux éléments à bride d'assemblage d'une conduite de transport de fluide d'axe Y-Y. Cet assemblage permet la solidarisation de deux éléments à bride 50, 52, ayant des profils légèrement différents, et entre lesquels est disposé un joint torique d'étanchéité 54. Les deux brides sont solidarisées par quatre boulons 56 dont seul l'un d'entre eux est visible sur cette figure.

Comme précédemment, les éléments 50, 52 comportent un tronçon tubulaire, respectivement 58, 60, comportant à son extrémité d'assemblage une bride extérieure, notée respectivement 62, 64, ayant un pourtour extérieur de forme carrée. La bride 62 est prolongée à l'intérieur par un collet axial 65 de centrage et de maintien du joint 54, prolongeant le tronçon tubulaire 58 au-delà de la bride 62. Le diamètre extérieur du collet 65 est légèrement inférieur au diamètre intérieur du débouché du tronçon 60. La bride 64 comporte intérieurement sur sa face d'accouplement 64A en contact avec la bride 62 un logement annulaire 66 de réception du joint 54, qui y est maintenu par le collet axial 65.

Par ailleurs, les surfaces d'accouplement 62A, 64A en contact respectivement des brides 62 et 64 présentent des formes tronconiques complémentaires centrées suivant l'axe Y-Y de l'assemblage. La surface tronconique 62A est convexe et fait donc saillie vers l'extérieur, alors que la surface 64A complémentaire est en creux. Par ailleurs, comme dans le mode de réalisation précédent, quatre encoches 68 sont prévues sur les brides 62 et 64 suivant des agencements analogues à ceux décrits en regard de la figure 1.

Comme cela est représenté plus en détail sur la figure 4, les surfaces tronconiques 62A, 64A s'étendent suivant toute la largeur des brides 62 et 64 depuis le pourtour extérieur jusqu'au logement 66. En particulier, ces surfaces tronconiques sont traversées par les encoches 68. Ainsi, lors du serrage des boulons 56, les surfaces d'accouplement 62A et 64A sont appliquées l'une contre l'autre sur l'essentiel de l'étendue des brides 62 et 64. Les contraintes dues au serrage se répartissent alors sur toute la périphérie de l'assemblage, depuis le pourtour extérieur des brides jusqu'au logement 66 de réception du joint d'étanchéité.

Suivant une variante de réalisation représentée sur la figure 5, les surfaces tronconiques, notées respectivement 62B, 64B sur cette figure, sont analogues aux surfaces 62A, 64A, mais sont limitées à l'intérieur d'un disque inscrit dans la région délimitée par les encoches 68. Les surfaces tronconiques 62B, 64B ont un pourtour extérieur sensiblement circulaire et sont prolongées extérieurement par des surfaces planes annulaires 62C, 64C sur lesquelles débouchent les encoches 68. Les surfaces 62C, 64C s'étendent perpendiculairement à l'axe Y-Y des éléments à bride ou en légère dépouille. Dans ces conditions, lors du serrage des boulons, le contact entre les brides 62 et 64 ne s'établit que suivant une couronne entourant le joint d'étanchéité 54. Ainsi, les contraintes dans les zones vulnérables situées autour des encoches 68 sont limitées, réduisant les risques de rupture des brides lors du serrage des boulons.

Les éléments à bride ainsi pourvus de surfaces d'accouplement tronconiques complémentaires permettent un auto-centrage des deux éléments l'un par rapport à l'autre suivant l'axe Y-Y.

Dans les modes de réalisation représentés aux figures 3 à 5, l'élément 50 dont la surface tronconique 62A (62B) est en saillie vers l'extérieur peut être réalisé à partir d'un simple moule formé de deux coquilles.

Par contre, l'élément 52, dont la surface tronconique 64A (64B) est en creux, est formé directement par le noyau central utilisé pour la fabrication du tronçon tubulaire 60. Ce noyau est muni à son extrémité d'un rebord périphérique extérieur de forme appropriée, portant une surface annulaire tronconique reproduisant en saillie la forme de la surface tronconique en creux à réaliser.

Les exemples décrits ici portent sur des assemblages de conduites pourvues de brides d'extrémité. Des assemblages analogues peuvent être utilisés pour le raccordement et la fixation de poteaux d'incendie disposés sur la voie publique ou encore de bouches d'incendie, c'est-à-dire de conduits comportant axialement une tige de commande d'une vanne disposée directement à l'intérieur du conduit. Ils peuvent encore s'appliquer à l'assemblage de tout autre type d'organe de voirie ou de circuit de transport de fluide.

De même, un assemblage mettant en oeuvre des encoches qui se croisent, tel que décrit ici, peut également être appliqué à des brides formées seulement d'un disque annulaire délimitant un passage central circulaire pour un tube dont l'extrémité est rabattue vers l'extérieur et forme une collerette périphérique de maintien sur laquelle s'appuie la bride.

Par ailleurs, dans l'assemblage décrit ici, chaque élément comporte quatre encoches angulairement décalées deux à deux, permettant de recevoir quatre boulons. Cependant, l'assemblage de deux pièces peut être assuré simplement à l'aide de deux encoches réalisées chacune sur une pièce avec leurs ouvertures décalées angulairement et au travers desquelles est introduite une tige de fixation, ou encore avec deux encoches sur chaque pièce.

L'invention s'applique également à des pièces à assembler de forme autre que carrée, notamment circulaire. De façon générale, des encoches situées dans des positions régulièrement réparties autour de l'axe général de la pièce et ayant chacune une direction générale qui forme un angle aigu non nul avec le rayon correspondant, permettent de réaliser l'assemblage de pièces identiques après retournement de l'une des pièces.

L'assemblage décrit ici facilite la réalisation des pièces quel que soit leur procédé de fabrication. Ainsi par exemple, les pièces peuvent être frittées, ou encore être usinées.

## Revendications

1. Assemblage de deux pièces (10, 12), du type comportant une tige (28) de fixation traversant une lumière de chaque pièce, caractérisé en ce que la lumière de chaque pièce (10, 12) est une encoche (20A, 20B, 22A, 228, 20A', 20B', 22A', 22B') dont la profondeur est supérieure au diamètre de la tige (28), les encoches des deux pièces étant disposées de telle sorte que, en position assemblée, les ouvertures de ces encoches soient décalées angulairement l'une par rapport à l'autre autour de l'axe de la tige (28).

2. Assemblage selon la revendication 1, caractérisé en ce que chaque encoche (20A, 20B, 22A, 22B, 20A', 20B', 22A', 22B') est ménagée dans une partie (18) en forme de bride de la pièce correspondante, et en ce que l'ouverture de chaque encoche débouche latéralement sur le pourtour de ladite bride.

3. Assemblage selon la revendication 1 ou 2, caractérisé en ce que, en position assemblée, les ouvertures des encoches sont décalées angulairement de sensiblement 90°.

4. Assemblage selon l'une quelconque des revendications précédentes, caractérisé en ce que les encoches (20A) sont délimitées par deux rives (23A, 23B) sensiblement parallèles reliées l'une à l'autre au fond de l'encoche par une portion (23C) en demi-cercle.

5. Assemblage selon l'une quelconque des revendications précédentes, caractérisé en ce que ladite tige (28) de fixation est la tige d'une vis d'un boulon (14), dont la tête de vis (30) prend appui sur l'une des pièces (10) et dont l'écrou (34) prend appui sur l'autre pièce (12).

6. Assemblage selon l'une quelconque des revendications précédentes, caractérisé en ce que chaque pièce (10, 12) comporte deux encoches (20B, 22B, 20B', 20A') de réception de deux tiges de fixation respectives, les ouvertures des encoches (20B, 22B) d'une même pièce (10) étant décalées angulairement l'une de l'autre et disposées de telle sorte que, en position assemblée, l'ouverture de chaque encoche (20B, 22B) de la première pièce soit décalée angulairement de l'ouverture de l'encoche (20B', 20A') correspondante de la deuxième pièce (12) autour de l'axe de la tige de fixation associée.

7. Assemblage selon la revendication 6, caractérisé en ce que chaque pièce (10) comporte deux paires d'encoches (20A, 20B, 22A, 22B) de réception de quatre tiges (28) de fixation respectives, les ouvertures des encoches (20A, 20B) d'une même paire étant orientées dans le même sens, alors que les ouvertures des encoches (22A, 22B) de paires différentes sont décalées angulairement de sensiblement 180°.

8. Assemblage selon la revendication 6 ou 7, dans lequel au moins l'une desdites pièces est sensiblement de symétrie axiale, caractérisé en ce que lesdites encoches sont ménagées sensiblement à la même distance de l'axe de ladite pièce.

9. Assemblage selon l'une quelconque des revendications précédentes, caractérisé en ce que les deux pièces (10, 12) sont sensiblement identiques.

10. Elément à bride d'assemblage, notamment élément de conduite de transport de fluide, du type comportant une bride extérieure (18) d'extrémité, caractérisé en ce que des encoches (20A, 20B, 22A, 22B) sont ménagées dans la bride (18) et sont régulièrement réparties autour de l'axe de la bride, chaque encoche ayant une direction générale qui forme un angle aigu non nul avec le rayon correspondant.

11. Elément à bride selon la revendication 10, caractérisé en ce que deux paires d'encoches (20A, 20B, 22A, 22B) sont ménagées dans la bride (18) avec leur ouverture débouchant latéralement sur le pourtour de cette bride, les ouvertures des encoches (20A, 20B) d'une même paire étant orientées dans le même sens, alors que les ouvertures des encoches (22A, 22B) de paires différentes sont décalées angulairement de sensiblement 180°.

12. Elément à bride selon la revendication 10 ou 11, caractérisé en ce que la bride (50) présente une surface d'accouplement (62A, 64A) avec une pièce complémentaire (52) de forme tronconique centrée sur l'axe (Y-Y) de la bride (16).

13. Elément à bride selon la revendication 12, caractérisé en ce que la surface tronconique (62B) a un pourtour extérieur sensiblement circulaire qui est contenu dans la région délimitée par les encoches.

14. Elément à bride selon l'une quelconque des revendications 10 à 13, caractérisé en ce que la bride (18) a un pourtour extérieur sensiblement carré.

15. Moule pour la fabrication d'un élément à bride d'assemblage selon l'une quelconque des revendications 10 à 14, caractérisé en ce qu'il comporte deux demi-moules, chaque demi-moule comportant un évidement (40) de forme sensiblement parallélépipédique dont le fond est muni d'au moins une protubérance (44A, 44B) de forme conjuguée à celle d'une encoche de la bride.

16. Moule selon la revendication 15, pour la fabrication d'un élément de conduite à bride d'assemblage, caractérisé en ce que l'évidement (40) est prolongé par un second évidement (42) en forme de demi-cylindre.
